# EUROPEAN PATENT SPECIFICATION

(11) **EP 4 491 359 B1**
(45) Date of publication and mention of the grant of the patent: **22.07.2026**
(21) Application number: 24182730.2
(22) Date of filing: 18.06.2024
(51) Int. Cl.: B27C 5/06, B27M 1/08, B23Q 7/00, B23Q 7/04

(54) **MACHINE TOOL WITH IMPROVED WORKPIECE LOADING SYSTEM AND METHOD THEREOF**
WERKZEUGMASCHINE MIT VERBESSERTEM WERKSTÜCKLADESYSTEM UND VERFAHREN DAZU
MACHINE-OUTIL AVEC SYSTÈME AMÉLIORÉ DE CHARGEMENT DES PIÈCES ET SON PROCÉDÉ

(30) Priority: 28.06.2023 IT 202300013440
(43) Date of publication of application: 15.01.2025
(73) Proprietor: SCM Group S.p.A., 47921 Rimini (RN) (IT)
(72) Inventor: PAOLIZZI, Simone, 47921 RIMINI (IT)
(74) Representative: Tiburzi, Andrea

(56) References cited:
- EP-A1- 2 361 738
- EP-A1- 3 552 786
- EP-A1- 3 639 971
- EP-B1- 2 159 020
- EP-B1- 2 363 260
- EP-B1- 2 415 571
- WO-A1-2010/041285
- DE-A1- 4 135 727
- IT-A1- 201700 083 048
- IT-A1- 201900 013 017
- IT-A1- FI20 100 071

## Description

The present invention concerns a machine tool for workpieces, in particular workpieces made of wood or similar materials, composite, polymeric, ceramic, metallic or other materials, according to the preamble of claim 1. Such a machine, and its method of operation are known from document EP 2 159 020 B1.

The present invention also concerns a method of operating the machine tool.

### Field of invention

In more detail, the invention concerns a machine tool provided with a loading system for loading pieces equipped with a lifter, designed and created, in particular, to move a piece to be loaded into the machine and allow the loading of pieces into the machine in a more comfortable and safe way.

In the following the description will be directed to a piece loading system installed in a working center for woodworking, but it is clear that it should not be considered limited to this specific use.

### Prior art

Currently there are machines known as working centers, for subjecting wooden pieces or similar materials to various machining, such as, for example, milling, drilling, edging. The aforementioned working centers are equipped with blocking devices, to block such pieces on a working plane. Depending on the type of work to be carried out, this working plane can be a multifunction working plane, or a so-called bar working plane.

In working centers with a bar top, the working plane comprises a plurality of bars, which are in turn equipped with one or more support bases. These support bases are coupled to the blocking devices of the pieces on said working plane. The bar working plane is also supported by a base and the bars are parallel to each other and movable along the base itself.

Vacuum transmission channels are arranged along the bars, connected to a vacuum pump. Furthermore, compressed air transmission channels are arranged along the bars, connected to a compressed air network.

The support bases are thus generally equipped with a vacuum supply channel and one or more compressed air supply channels.

The blocking devices can be clamping devices, for example clamps, which in use are connected to the compressed air supply channels present in the bases, or holding devices, for example suction cups, which, in use, are connected to the vacuum supply channels present in the bases. The retaining members are elements equipped with a base body, generally cylindrical, having a vacuum supply duct, and a support plate, equipped with at least one opening for the passage of vacuum, on which it is intended to be placed the piece to be worked, which, in use, is held by vacuum supply.

The clamping elements are generally elements equipped with a lower jaw and an upper jaw. These jaws are relatively movable towards and away from each other, generally in a direction perpendicular to the working plane. The movement of the jaws occurs via compressed air, electric or other pneumatic actuators. The workpiece is usually positioned on the lower jaw and, subsequently, the lower jaw and the upper jaw are moved with relative motion towards each other, in order to clamp the workpiece.

The working centers are also equipped with a crossbar, which can be mobile or fixed with respect to the working plane. Generally the crossbar supports one or more machining heads. Each machining head is movable along at least one axis. In so-called five-axis machining centers, the machining head can move along three orthogonal axes and can rotate around two other axes. Generally, each machining head is equipped with a spindle, coupled, in use, to a tool holder, which can in turn be coupled to a specific tool depending on the type of machining to be performed.

Known machining centers are also equipped with auxiliary loading devices, present on one or more bars of the working plane. Such auxiliary devices include a lifter, configured to move a workpiece in a direction perpendicular to the working plane, and a pneumatic actuator for moving said lifter.

The lifter usually has the shape of a slab and is arranged so as to have its largest extension dimension in a direction parallel to the bars, its smallest extension dimension in a direction parallel to the direction of development of the base and the third dimension in a direction perpendicular to the working plane.

One or more stops are arranged on the bars, moving in a direction perpendicular to the working plane, between a retracted position and an extracted position with respect to the bar. When an operator needs to load a piece to be machined, for example in a bar machining center equipped with clamping elements, the lifters are positioned in a raised position with respect to the bars and clamping elements. In an example of operation, the operator places the piece on the upper surface (or edge) of the lifters. The stops are brought to the extracted position and the lifters are lowered to a position such that the upper surface of the piece is at a height lower than the height of the upper jaw of the clamping devices to be used to clamp the piece. The lower surface of the piece will then be at a higher height than that of the lower jaw of the clamping elements. In the event that the stops are placed, in a direction parallel to the bars, between the clamping members and the piece, the lifters must be lowered into a position such that the lower surface of the piece is at a higher height than the furthest end of the stops, when these are in the extracted position.

The operator then moves the piece in a direction parallel to the bars, to send it abutting against one of the stops on the bars, so that the piece is in a known position. Finally, the upper and lower jaws are brought together to clamp the piece.

A disadvantage of known auxiliary loading devices is that they only provide movement in a direction perpendicular to the working plane, leaving the operator with the task of moving the piece (generally having a considerable weight) in a direction parallel to the bars.

Another disadvantage of the known auxiliary loading devices is that, in the case of simultaneous loading of several pieces on the same group of bars, to load the piece in a distal position from the operator, the latter must lean over the bar table, to reference the piece against the stops. This position is very uncomfortable and does not allow precise positioning of the piece in a comfortable way.

### Purpose of the invention

In light of the above, it is therefore the aim of the present invention to realize a machine tool equipped with improved auxiliary loading devices which overcome the technical problems of known solutions.

Another aim of the invention is to provide a machine tool in which loading the pieces is comfortable and safe for the operator.

A further aim of the present invention is to provide improved auxiliary loading devices which facilitate the loading of a plurality of pieces into the machine at the same time.

### Object of the invention

It is, therefore, specific object of the present invention a machine for machining a piece made of wood or similar materials, in composite, polymeric, ceramic, or other materials, comprising: a working plane having one or more bars, which mainly extend in a first direction; and one or more loading auxiliary devices, each associated with at least one respective of said bars, wherein each auxiliary device comprises at least one lifting element, to support said piece, wherein said lifting element is movable in a second direction perpendicular to said working plane, between a first lowered position and a second raised position with respect to said working plane; wherein said machine is characterized in that each of said one or more loading auxiliary devices comprises at least one abutment element, arranged on said lifting element, for positioning said piece abutting against said abutment element, when said lifting element is in said second raised position.

Always according to the invention, said machine may comprise one or more blocking devices arranged and slidingly movable slide on said one or more bars.

Still according to the invention, said lifting element may extend mainly in said first direction.

Advantageously according to the invention, said at least one abutment element may be movable in said first direction and/or in said second direction.

Further according to the invention, said at least one abutment element may be integral with said lifting element.

Preferably according to the invention, said at least one lifting element may have an upper surface, and said abutment element may be obtained by shaping said upper surface.

Always according to the invention, said machine may comprise at least one abutment member, having one end, arranged on at least one of said one or more bars, for positioning said piece in abutment against said abutment member.

Still according to the invention, said abutment member may be movable in said second direction between a retracted position and an extracted position, with respect to at least one of said one or more bars.

Further according to the invention, said one or more blocking devices may be clamping members, each comprising a lower jaw, having a support surface for resting said piece, and an upper jaw, wherein said jaws are relatively movable towards and away, in said second direction.

It is also object of the present invention a method of operation of a machine as defined above, comprising the following steps:
(a) moving said lifting element, along said second direction, in said second raised position; and
(b) positioning said piece on said at least one lift element;
   wherein said method is characterized in that said step (b) includes the following sub-step:
   (b1) moving said piece with relative motion towards said abutment element, so as to abut against said abutment element.

Always according to the invention, said method may comprise, after said step (b1), the following further following steps:
(c) moving said at least one lifting element, along said second direction, to a third intermediate position, between said second raised position and said first lowered position, said third intermediate position being such that said piece is in an intermediate position between a first height of said lower jaw and a second height of said upper jaw;
(d) moving at least one of said one or more clamping elements of relative motion towards said piece, in said first direction, in a position such that said piece is, at least partially, in a volume having as base area said support surface;
(e) moving said at least one lifting element, along said second direction, in said first lowered position, so that said piece is no longer in contact with said lifting element;
(f) moving said lower jaw and/or said upper jaw in relative approach in said second direction, so as to clamp said piece.

Still according to the invention, said method may comprise the following further steps:
(g) moving at least one of said one or more clamping elements, supporting said piece, along said first direction, towards said abutment element;
(h) moving said lower jaw and/or said upper jaw in relative distancing in said second direction, so as to unlock said piece;
(i) moving said at least one lifting element, along said second direction, in said third intermediate position, so as to intercept and lift said piece;
(I) moving at least one of said one or more clamping elements, along said first direction, away from said abutment element;
(m) moving said lifting element, along said second direction, in said second raised position.

Further according to the invention, said machine may comprise at least one abutment member, arranged on at least one of said one or more bars, to position said piece in abutment against said abutment member, said method may further comprise after said step (e) and before said step (f), the following step:
(e1) moving said piece in said first direction towards said abutment member so as to bring it into abutment with said abutment member.

Preferably according to the invention, said abutment member may be interposed, in said first direction, between said at least one of said one or more clamping members and said piece, said method being characterized in that said step (c) further provides that said third intermediate position is such that said piece is in a position, in said second direction, intermediate between a height of one end of said abutment member, distal with respect to one of said one or more bars, and a second height of said upper jaw.

### Brief description of the figures

The present invention will be now described, for illustrative but not limitative purposes, according to its preferred embodiments, with particular reference to the figures of the enclosed drawings, wherein:
figure 1 shows an axonometric view of a machine tool comprising an auxiliary loading device improved according to the invention;
figure 2 shows an axonometric view of a bar of the machine figure 1, equipped with an auxiliary loading device according to the invention, in which a lifting element is in a second raised position;
figure 3 shows an axonometric view of a bar of the machine shown in figure 1, equipped with an auxiliary loading device according to the invention, in which a lifting element is in a second raised position;
figure 4 shows an axonometric view of a bar of the machine of figure 1, equipped with an improved auxiliary loading device according to the invention, in which a lifting element is in a first lowered position;
figure 5 shows a front view of a bar of a machine equipped with an auxiliary loading device according to the invention;
figures 6A to 7 show front views of alternative embodiments of a lifting element provided in an auxiliary loading device according to the invention; and
figures 8A to 11C show steps of a method of operation of a machine according to the invention.

### Detailed description

In the various figures the similar parts will be indicated with the same numerical references.

With reference to the attached figures, it is observed a machine M for machining pieces made of wood or similar materials, composite, polymeric, ceramic, metallic or other materials equipped with one or more loading auxiliary devices 4 to load the pieces P to be machined.

In the following the description will be directed to a machine tool, also known as a machining center, but it is clear that it should not be considered limited to this specific use.

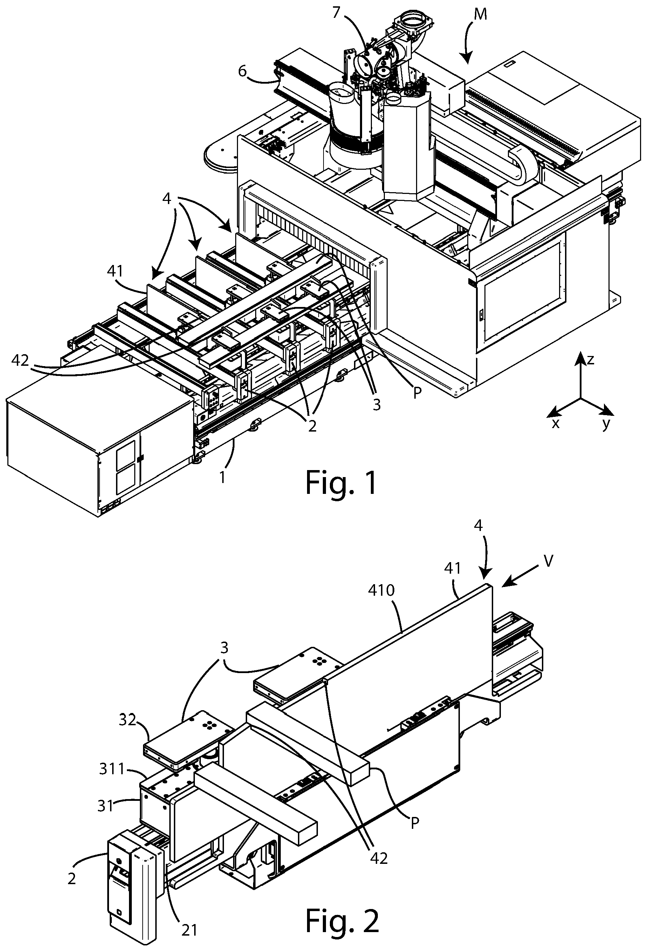

Referring to figure 1, a machine M is observed, comprising a working plane 1, of the so-called bar type, for supporting and blocking the pieces to be machined, having one or more bars 2.

Each bar 2 extends predominantly in a first Y direction. According to the invention, the bars 2 arranged on a base and are slidably movable on it.

The machine M also has a crossbar 6, which can be mobile or fixed with respect to the working plane 1. The crossbar 6 supports one or more machining heads 7.

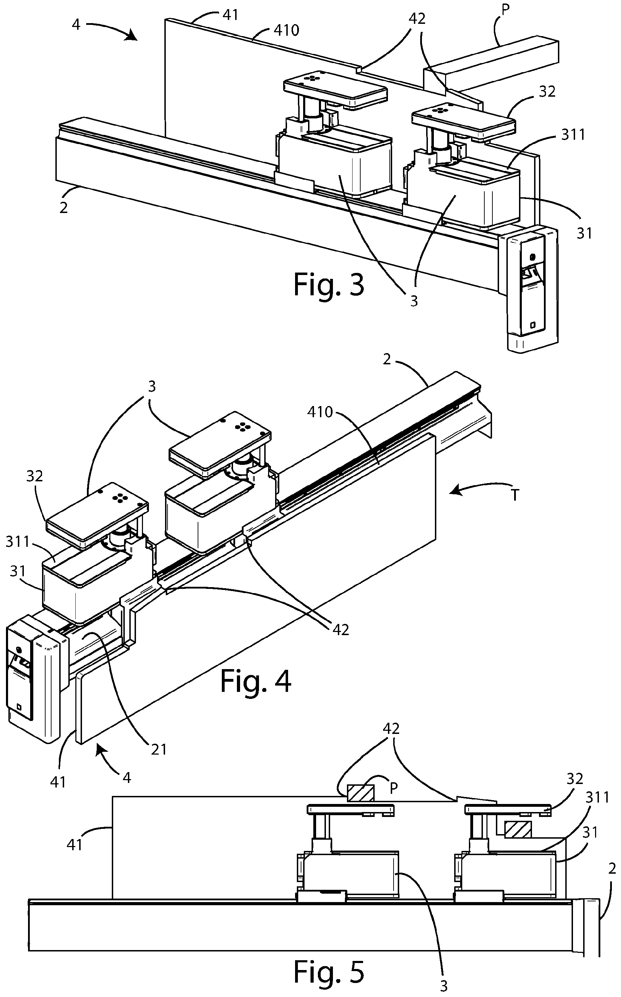

As can be seen from figures 2-5, the machine M also comprises one or more auxiliary loading devices 4, respectively associated with at least one respective bar 2, comprising at least one lifting element 41 to support the piece P, in which the lifting element 41 is movable in a second direction Z, perpendicular to the working plane, between a first lowered position T, and a second raised position V with respect to the working plane 1.

The lifting element 41 can be moved in the second Z direction via a first actuator.

Each bar 2 has a lateral surface 21 and generally each lifting element 41 is arranged on said lateral surface 21 of a respective bar 2 and extends mainly in the first Y direction, parallel to the bar 2 on which it is arranged.

In the embodiment shown in the figures, the lifting element 41 is slab-shaped. In other embodiments it may have different shapes.

In the embodiment shown in the figures, the working plane 1 extends mainly in a third X direction, perpendicular to the first Y direction and to the second Z direction.

In an alternative embodiment, the working plane 1 extends predominantly in one direction, parallel to the first Y direction, i.e. the direction of maximum extension of each bar 2.

The machine M also includes one or more blocking devices 3, arranged and slidingly mobile on said one or more bars 2, to support and block the pieces P to be machined.

In the embodiment shown in the figures, the blocking devices 3 are clamping members, each comprising a lower jaw 31, having a support surface 311 for resting said piece P, and an upper jaw 32, relatively movable towards and away from each other, in the second Z direction.

The lower jaw 31 and/or the upper jaw 32 can be moved by a second actuator.

In another embodiment, the blocking devices 3 are retention or blocking members for blocking the pieces P to be machined by vacuum.

The machine M also comprises at least one abutment member 5, having an end 51, arranged on at least one of said one or more bars 2, to position said piece P in abutment against said abutment member 5.

The abutment member 5 is mobile in the second Z direction between a retracted position and an extracted position, with respect to at least one of the bars 2.

The abutment member 5 can also be mobile in the first Y direction.

The one or more auxiliary loading devices 4 comprise at least one abutment element 42, 42' arranged on the lifting element 41, to move the piece P by relative motion towards the abutment element 42, 42', so as to be abutting against the abutment element 42, 42', when the lifting element 41 is in the second raised position V.

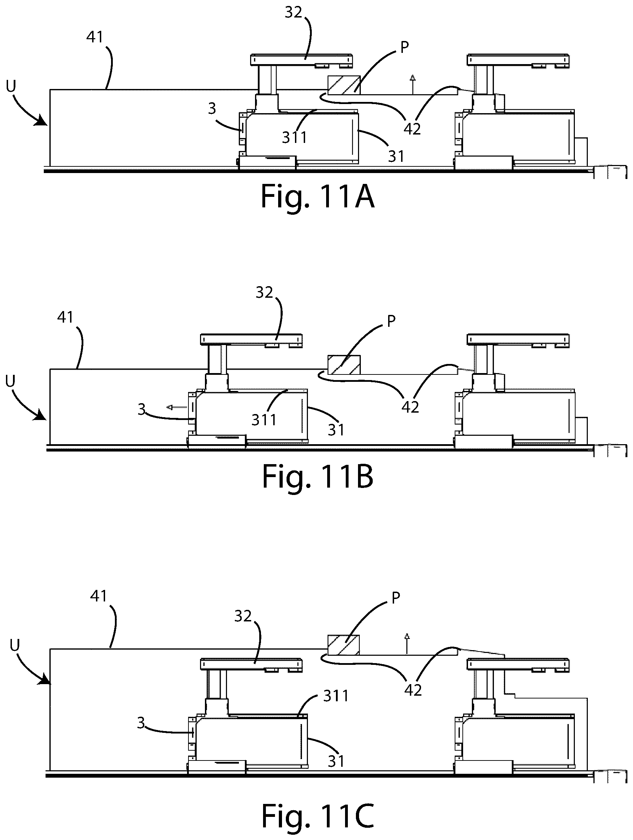

In the embodiment shown in figures 1-6D and 8A-11C, the abutment element 42 is an integral part of the lifting element 41.

The lifting element 41 has an upper surface 410. The upper surface 410 comprises at least a portion parallel to said working plane 1 and at least a portion perpendicular to said working plane, the latter corresponding to the abutment element 42.

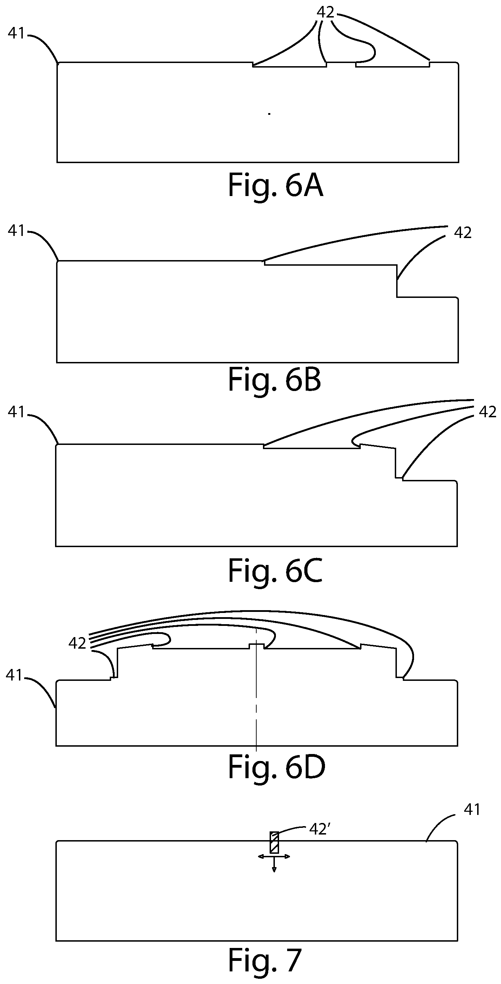

Figures 6A-6D show alternative embodiments for the lifting element 41, each comprising a plurality of abutment elements 42.

In an alternative embodiment, shown in figure 7, the abutment element 42' is arranged on the lifting element 41 and is movable in the first Y direction and/or in the second Z direction. By way of example, the abutment element 42' is represented as a cylindrical pin.

The operation of the machine M described above is as follows.

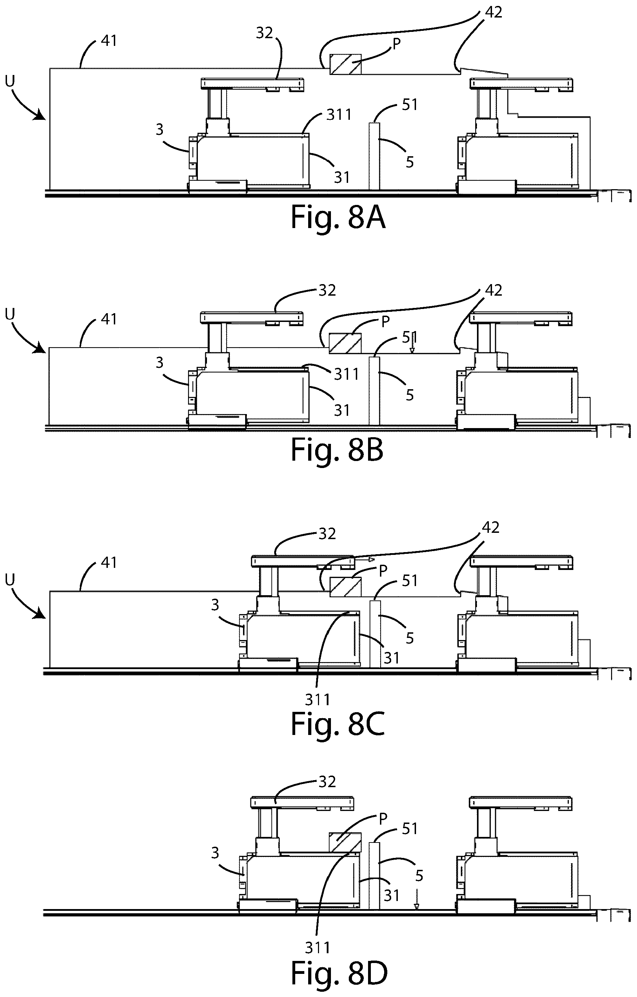

As can be seen in figure 8A, the lifting element 41 is arranged in the second raised position V, the piece P is placed on the lifting element and is arranged against the lifting element 42.

In the embodiment in which the abutment element 42' is mobile in the first Y direction and/or in the second Z direction, the piece P is moved with relative motion towards the abutment element 42' and is placed in abutment against it.

In the embodiment in which the blocking devices 3 are clamping members, as can be seen from figure 8B, the lifting element 41 is moved along the second direction Z in a third intermediate position U, between the second raised position V and the first lowered position T. The third intermediate position U is such that the piece P is in a position, along the second direction Z, intermediate between a first height of the lower jaw 31 and a second height of the upper jaw 32.

As can be seen from figure 8C, at least one of the one or more clamping members 3 is moved with relative motion approaching the piece P, in the first direction Y, in a position such that the piece P is, at least partially, in a volume having the support surface 311 as its base area.

As can be seen from figure 8D, the lifting element is moved, along the second direction Z, to the first lowered position T, in such a way that the piece P is no longer in contact with the lifting element 41 and is supported only by the lower jaw 31.

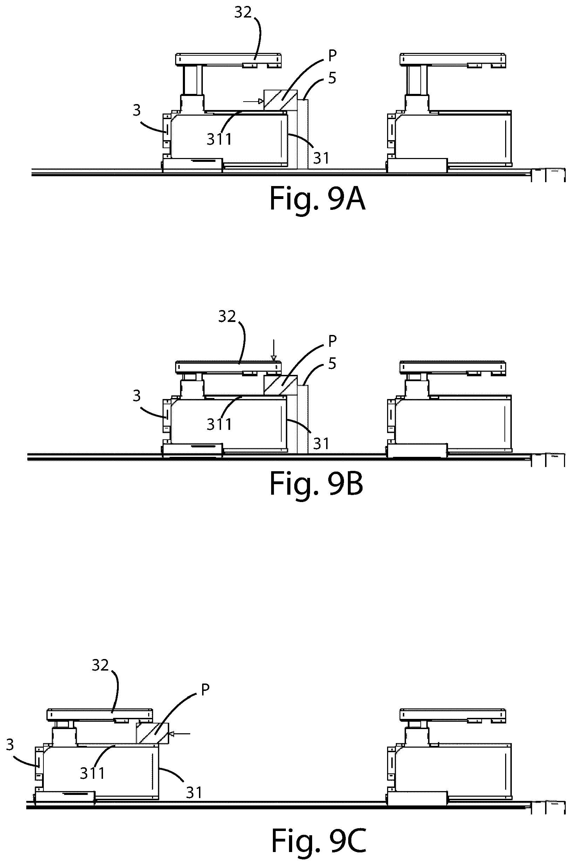

In the embodiment in which the abutment member 5 is present, as can be seen in figure 9A, the piece P is moved with relative motion, in the first Y direction, towards the abutment member 5, so as to bring it to rest with it, in order to increase the precision of the positioning of the piece P, obtained through the abutment position against the abutment element 42, 42'.

In case of the abutment member 5 is interposed, along the first direction Y, between at least one of the one or more clamping members 3 and the piece P, the third intermediate position U must be such that the piece P is in a position, in the second Z direction, intermediate between a height of an end 51 of said abutment member 5, distal with respect to one or more bars 2, and a second height of the upper jaw 32.

As can be seen in figure 9B, the lower jaw 31 and/or the upper jaw 32 are moved with relative motion in approach, so as to clamp the piece P.

As shown in figure 9C, the clamping member 3 can be moved along the respective bar 2 together with the piece P.

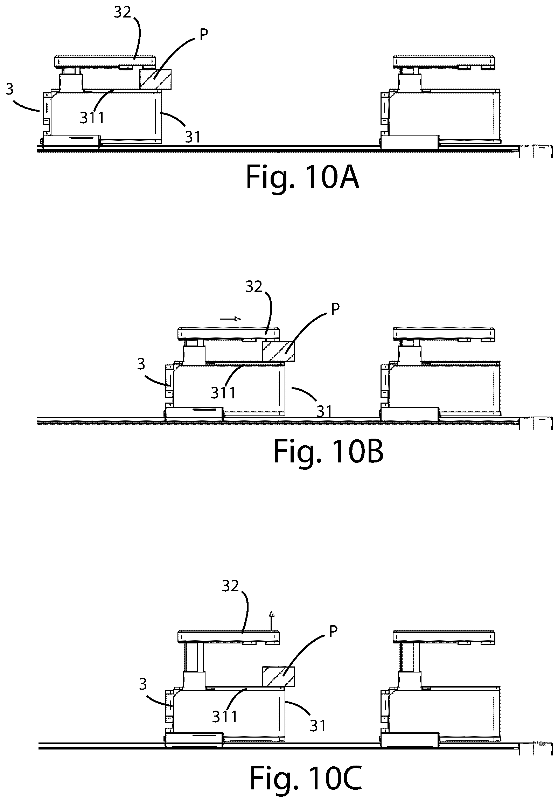

Figures 10A-11C illustrate the unloading step of the piece P. It is observed that the clamping member 3 can be moved along the respective bar 2, approaching said abutment element (42; 42').

The lower jaw 31 and/or the upper jaw 32 are moved away by relative motion, so as to unlock the piece P.

The lifting element 41 is moved, along said second direction Z, to the third intermediate position U, in such a way as to intercept and lift said piece (P).

The clamping member 3 is moved along the first Y direction, away from the abutment element (42; 42'). The lifting element 41 is moved along the second direction Z, in the second raised position V.

Finally the piece P can be unloaded from the machine M.

### Advantages

An advantage of the present invention is that it facilitates the loading of a plurality of pieces into the machine at the same time.

Another advantage of the present invention is to provide an improved loading auxiliary device that makes loading pieces ergonomic.

A further advantage of the present invention is that of creating a machine tool equipped with improved auxiliary loading devices having competitive costs compared to the prior art, and which overcomes the technical problems of the prior art.

## Claims

1. Machine (M) for machining a piece (P) made of wood or similar materials, in composite, polymeric, ceramic, or other materials, comprising:
a working plane (1) having one or more bars (2), which mainly extend in a first direction (Y); and
one or more loading auxiliary devices (4), each associated with at least one respective of said bars (2), wherein each auxiliary device (4) comprises
at least one lifting element (41), to support said piece (P),
wherein said lifting element (41) is movable in a second direction (Z) perpendicular to said working plane (1), between a first lowered position (T) and a second raised position (V) with respect to said working plane (1);
wherein said bars (2) are arranged on a base and are slidably movable on it, and
wherein each of said one or more loading auxiliary devices (4) comprises at least one abutment element (42; 42'), arranged on said lifting element (41), for positioning said piece (P) abutting against said abutment element (42; 42'), when said lifting element (41) is in said second raised position (V);
wherein said machine (M) is **characterized**
**in that** said lifting element (41) extends mainly in said first direction (Y).

2. Machine (M) according to claim 1, **characterized in that** it comprises one or more blocking devices (3) arranged and slidingly movable slide on said one or more bars (2).

3. Machine (M) according to any of the preceding claims, **characterized in that** said at least one abutment element (42') is movable in said first direction (Y) and/or in said second direction (Z).

4. Machine (M) according to any one of claims 1-2 **characterized in that** said at least one abutment element (42) is integral with said lifting element (41).

5. Machine (M) according to the preceding claim, **characterized**
**in that** said at least one lifting element (41) has an upper surface (410), and
**in that** said abutment element (42) is obtained by shaping said upper surface (410).

6. Machine (M) according to any one of the preceding claims **characterized in that** it comprises at least one abutment member (5), having one end (51), arranged on at least one of said one or more bars (2), for positioning said piece (P) in abutment against said abutment member (5).

7. Machine (M) according to the preceding claim, **characterized in that** said abutment member (5) is movable in said second direction (Z) between a retracted position and an extracted position, with respect to at least one of said one or more bars (2).

8. Machine (M) according to any one of the preceding claims, **characterized in that** said one or more blocking devices (3) are clamping members, each comprising a lower jaw (31), having a support surface (311) for resting said piece (P), and an upper jaw (32), wherein said jaws (31, 32) are relatively movable towards and away, in said second direction (Z).

9. Method of operation of a machine (M) according to any one of claims 1-8, comprising the following steps:
(a) moving said lifting element (41), extending mainly in said first direction (Y), along said second direction (Z), in said second raised position (V); and
(b) positioning said piece (P) on said at least one lift element (41);
wherein said method is **characterized in that** said step (b) includes the following sub-step:
(b1) moving said piece (P) with relative motion towards said abutment element (42; 42'), so as to abut against said abutment element (42; 42').

10. Method of operation of a machine (M) according to the preceding claim, when dependent on claim 9, **characterized in that** it comprises, after said step (b1), the following further following steps:
(c) moving said at least one lifting element (41), along said second direction (Z), to a third intermediate position (U), between said second raised position (V) and said first lowered position (T), said third intermediate position (U) being such that said piece (P) is in an intermediate position between a first height of said lower jaw (31) and a second height of said upper jaw (32);
(d) moving at least one of said one or more clamping elements (3) of relative motion towards said piece (P), in said first direction (Y), in a position such that said piece (P) is, at least partially, in a volume having as base area said support surface (311);
(e) moving said at least one lifting element (41), along said second direction (Z), in said first lowered position (T), so that said piece (P) is no longer in contact with said lifting element (41 );
(f) moving said lower jaw (31) and/or said upper jaw (32) in relative approach in said second direction (Z), so as to clamp said piece (P).

11. Method of operation of a machine (M) according to the preceding claim, **characterized in that** it comprises the following further steps:
(g) moving at least one of said one or more clamping elements (3), supporting said piece (P), along said first direction (Y), towards said abutment element (42; 42');
(h) moving said lower jaw (31) and/or said upper jaw (32) in relative distancing in said second direction (Z), so as to unlock said piece (P);
(i) moving said at least one lifting element (41), along said second direction (Z), in said third intermediate position (U), so as to intercept and lift said piece (P);
(I) moving at least one of said one or more clamping elements (3), along said first direction (Y), away from said abutment element (42; 42');
(m) moving said lifting element (41), along said second direction (Z), in said second raised position (V).

12. Method of operation of a machine (M) according to any one of claims 10 or 11, wherein said machine (M) comprises at least one abutment member (5), arranged on at least one of said one or more bars (2), to position said piece (P) in abutment against said abutment member (5), said method further comprising after said step (e) and before said step (f), the following step:
(e1) moving said piece (P) in said first direction (Y) towards said abutment member (5) so as to bring it into abutment with said abutment member (5).

13. Method of operation of a machine (M) according to the preceding claim in which said abutment member (5) is interposed, in said first direction (Y), between said at least one of said one or more clamping members (3) and said piece (P), said method being **characterized in that** said step (c) further provides that said third intermediate position (U) is such that said piece (P) is in a position, in said second direction (Z), intermediate between a height of one end (51) of said abutment member (5), distal with respect to one of said one or more bars (2), and a second height of said upper jaw (32).

## Patentansprüche

1. Maschine (M) zur Bearbeitung eines Werkstücks (P) aus Holz oder ähnlichen Materialien, aus Verbundwerkstoffen, Polymeren, Keramik oder anderen Materialien, bestehend aus:
eine Arbeitsebene (1) mit einer oder mehreren Leisten (2), die sich im Wesentlichen in einer ersten Richtung (Y) erstrecken; und
eine oder mehrere Ladehilfseinrichtungen (4), von denen jede mindestens einer der genannten Stangen (2) zugeordnet ist, wobei jede Hilfseinrichtung (4) umfasst
mindestens ein Hebeelement (41) zum Abstützen des Werkstücks (P),
wobei das Hubelement (41) in einer zweiten Richtung (Z) senkrecht zur Arbeitsebene (1) zwischen einer ersten abgesenkten Position (T) und einer zweiten angehobenen Position (V) in Bezug auf die Arbeitsebene (1) bewegbar ist;
wobei die genannten Stangen (2) auf einer Basis angeordnet und auf dieser verschiebbar sind, und
wobei jede der einen oder mehreren Ladehilfseinrichtungen (4) mindestens ein am Hebeelement (41) angeordnetes Anschlagelement (42; 42') umfasst, um das Werkstück (P) so zu positionieren, dass es an dem Anschlagelement (42; 42') anliegt, wenn sich das Hebeelement (41) in der zweiten angehobenen Position (V) befindet;
wobei die Maschine (M) **dadurch gekennzeichnet** ist, wobei sich das genannte Hebeelement (41) hauptsächlich in der genannten ersten Richtung (Y) erstreckt.

2. Maschine (M) nach Anspruch 1, **dadurch gekennzeichnet, dass** sie eine oder mehrere Sperrvorrichtungen (3) umfasst, die auf der einen oder den mehreren Stangen (2) angeordnet und verschiebbar sind.

3. Vorrichtung (M) nach einem der vorstehenden Ansprüche, **dadurch gekennzeichnet, dass** das mindestens eine Anschlagelement (42') in der ersten Richtung (Y) und/oder in der zweiten Richtung (Z) bewegbar ist.

4. Maschine (M) nach einem der Ansprüche 1-2, **dadurch gekennzeichnet, dass** das mindestens eine Anschlagelement (42) einstückig mit dem Hebeelement (41) ausgebildet ist.

5. Maschine (M) nach dem vorstehenden Anspruch, **dadurch gekennzeichnet, dass** das mindestens eine Hebeelement (41) eine Oberseite (410) aufweist und dass das Anschlagelement (42) durch Ausformung der Oberseite (410) entsteht.

6. Maschine (M) nach einem der vorstehenden Ansprüche, **dadurch gekennzeichnet, dass** sie mindestens ein Anschlagelement (5) umfasst, das an mindestens einer der einen oder mehreren Stangen (2) angeordnet ist und ein Ende (51) aufweist, um das Werkstück (P) in Anlage an das Anschlagelement (5) zu bringen.

7. Maschine (M) nach dem vorstehenden Anspruch, **dadurch gekennzeichnet, dass** das Anschlagelement (5) in der zweiten Richtung (Z) zwischen einer zurückgezogenen Position und einer ausgefahrenen Position in Bezug auf mindestens eine der einen oder mehreren Stangen (2) bewegbar ist.

8. Maschine (M) nach einem der vorstehenden Ansprüche, **dadurch gekennzeichnet, dass** die eine oder die mehreren Arretiervorrichtungen (3) Klemmelemente sind, die jeweils eine untere Klemmbacke (31) mit einer Auflagefläche (311) zum Auflegen des Werkstücks (P) und eine obere Backe (32), wobei die Backen (31, 32) in der zweiten Richtung (Z) relativ zueinander hin und voneinander weg bewegbar sind.

9. Verfahren zum Betrieb einer Maschine (M) gemäß einem der Ansprüche 1-8, das die folgenden Schritte umfasst:
(a) Bewegen des sich hauptsächlich in der ersten Richtung (Y) erstreckenden Hebelements (41) entlang der zweiten Richtung (Z) in die zweite angehobene Position (V); und
(b) Anordnen des Teils (P) auf dem mindestens einen Hebeelement (41);
wobei das Verfahren **dadurch gekennzeichnet ist, dass** der Schritt (b) den folgenden Teilschritt umfasst:
(b1) Bewegen des Teils (P) mit einer Relativbewegung in Richtung des Anschlagelements (42; 42'), sodass es an dem Anschlagelement (42; 42') anliegt.

10. Verfahren zum Betrieb einer Maschine (M) gemäß dem vorstehenden Anspruch, sofern es auf Anspruch 9 gestützt ist, **dadurch gekennzeichnet, dass** es nach dem genannten Schritt (b1) die folgenden weiteren Schritte umfasst:
(c) Bewegen des mindestens einen Hebelements (41) entlang der zweiten Richtung (Z) in eine dritte Zwischenposition (U) zwischen der zweiten angehobenen Position (V) und der ersten abgesenkten Position (T), wobei die dritte Zwischenposition (U) so beschaffen ist, dass sich das Werkstück (P) in einer Zwischenposition zwischen einer ersten Höhe der Unterbacke (31) und einer zweiten Höhe der Oberbacke (32) befindet;
(d) Bewegen mindestens eines der einen oder mehreren Klemmelemente (3) in relativer Bewegung in Richtung des Werkstücks (P) in der ersten Richtung (Y) in eine Position, in der sich das Werkstück (P) zumindest teilweise in einem Raum befindet, dessen Grundfläche die Auflagefläche (311) bildet;
(e) Bewegen des mindestens einen Hebeelements (41) entlang der zweiten Richtung (Z) in die erste abgesenkte Position (T), sodass das Werkstück (P) nicht mehr mit dem Hebeelement (41) in Kontakt steht;
(f) Bewegen des Unterkiefers (31) und/oder des Oberkiefers (32) in relativer Annäherung in der zweiten Richtung (Z), um das Werkstück (P) zu klemmen.

11. Verfahren zum Betrieb einer Maschine (M) gemäß dem vorstehenden Anspruch, **dadurch gekennzeichnet, dass** es die folgenden weiteren Schritte umfasst:
(g) Bewegen mindestens eines der einen oder mehreren Klemmelemente (3), die das Werkstück (P) halten, entlang der ersten Richtung (Y) in Richtung des Anschlagelements (42; 42');
(h) Bewegen des Unterkiefers (31) und/oder des Oberkiefers (32) in relativer Entfernung zueinander in der zweiten Richtung (Z), um das Teil (P) zu entriegeln;
(i) Bewegen des mindestens einen Hebeelements (41) entlang der zweiten Richtung (Z) in die dritte Zwischenposition (U), um das Werkstück (P) aufzunehmen und anzuheben;
(l) Bewegen mindestens eines der einen oder mehreren Klemmelemente (3) entlang der ersten Richtung (Y) weg von dem Anschlagelement (42; 42');
(m) Bewegen des Hubelements (41) entlang der zweiten Richtung (Z) in die zweite angehobene Position (V).

12. Verfahren zum Betrieb einer Maschine (M) gemäß einem der Ansprüche 10 oder 11, wobei die Maschine (M) mindestens ein Anschlagelement (5) umfasst, das an mindestens einer der einen oder mehreren Stangen (2) angeordnet ist, um das Werkstück (P) in Anlage an dem Anschlagelement (5) zu positionieren, wobei das Verfahren ferner nach dem Schritt (e) und vor dem Schritt (f) den folgenden Schritt umfasst:
(e1) Bewegen des Teils (P) in der ersten Richtung (Y) auf das Anschlagelement (5) zu, um es mit dem Anschlagelement (5) in Anlage zu bringen.

13. Verfahren zum Betreiben einer Maschine (M) gemäß dem vorstehenden Anspruch, bei dem das Anschlagelement (5) in der ersten Richtung (Y) zwischen dem mindestens einen der einen oder mehreren Klemmelemente (3) und dem Werkstück (P) angeordnet ist, wobei das Verfahren **dadurch gekennzeichnet ist, dass** der Schritt (c) ferner vorsieht, dass die dritte Zwischenposition (U) derart ist, dass sich das Werkstück (P) in der zweiten Richtung (Z) in einer Position befindet, die zwischen einer Höhe eines Endes (51) des Anschlagelements (5), das in Bezug auf eine der einen oder mehreren Stangen (2) distal liegt, und einer zweiten Höhe der oberen Backe (32).

## Revendications

1. Machine (M) destinée à l'usinage d'une pièce (P) en bois ou en matériaux similaires, en matériaux composites, polymères, céramiques ou autres, comprenant:
un plan de travail (1) comportant une ou plusieurs barres (2) qui s'étendent principalement dans une première direction (Y); et
un ou plusieurs dispositifs auxiliaires de chargement (4), chacun étant associé à au moins l'une desdites barres (2), chaque dispositif auxiliaire (4) comprenant
au moins un élément de levage (41), destiné à soutenir ladite pièce (P),
dans lequel ledit élément de levage (41) est mobile dans une deuxième direction (Z) perpendiculaire audit plan de travail (1), entre une première position abaissée (T) et une deuxième position relevée (V) par rapport audit plan de travail (1);
dans lequel lesdites barres (2) sont disposées sur une base et peuvent coulisser sur celle-ci, et
dans lequel chacun desdits un ou plusieurs dispositifs auxiliaires de chargement (4) comprend au moins un élément de butée (42; 42'), disposé sur ledit élément de levage (41), destiné à positionner ladite pièce (P) en butée contre ledit élément de butée (42; 42'),
lorsque ledit élément de levage (41) se trouve dans ladite deuxième position relevée (V);
dans laquelle ladite machine (M) est **caractérisée en ce que** ledit élément de levage (41) s'étend principalement dans ladite première direction (Y).

2. Machine (M) selon la revendication 1, **caractérisée en ce qu'**elle comprend un ou plusieurs dispositifs de blocage (3) agencés de manière à pouvoir coulisser sur ladite ou lesdites barres (2).

3. Machine (M) selon l'une quelconque des revendications précédentes, **caractérisée en ce que** ledit au moins un élément de butée (42') est mobile dans ladite première direction (Y) et/ou dans ladite deuxième direction (Z).

4. Machine (M) selon l'une quelconque des revendications 1-2, **caractérisée en ce que** ledit au moins un élément d'appui (42) est solidaire dudit élément de levage (41).

5. Machine (M) selon la revendication précédente, **caractérisée en ce que** ledit au moins un élément de levage (41) présente une surface supérieure (410), et **en ce que** ledit élément d'appui (42) est obtenu par mise en forme de ladite surface supérieure (410).

6. Machine (M) selon l'une quelconque des revendications précédentes, **caractérisée en ce qu'**elle comprend au moins un élément de butée (5), comportant une extrémité (51) disposée sur au moins l'une desdites une ou plusieurs barres (2), pour positionner ladite pièce (P) en butée contre ledit élément de butée (5).

7. Machine (M) selon la revendication précédente, **caractérisée en ce que** ledit élément de butée (5) est mobile dans ladite deuxième direction (Z) entre une position rétractée et une position déployée, par rapport à au moins l'une desdites une ou plusieurs barres (2).

8. Machine (M) selon l'une quelconque des revendications précédentes, **caractérisée en ce que** ledit ou lesdits dispositifs de blocage (3) sont des éléments de serrage, comprenant chacun une mâchoire inférieure (31), dotée d'une surface d'appui (311) destinée à recevoir ladite pièce (P), et une mâchoire supérieure (32), lesdites mâchoires (31, 32) pouvant se rapprocher et s'éloigner l'une de l'autre dans ladite deuxième direction (Z).

9. Procédé de fonctionnement d'une machine (M) selon l'une quelconque des revendications 1-8, comprenant les étapes suivantes:
(a) déplacer ledit élément de levage (41), s'étendant principalement dans ladite première direction (Y), le long de ladite deuxième direction (Z), dans ladite deuxième position relevée (V); et
(b) positionner ladite pièce (P) sur ledit au moins un élément de levage (41);
dans lequel ledit procédé se **caractérise en ce que** ladite étape (b) comprend la sous-étape suivante:
(b1) déplacer ladite pièce (P) par un mouvement relatif vers ledit élément de butée (42; 42'), de manière à venir en butée contre ledit élément de butée (42; 42').

10. Procédé de fonctionnement d'une machine (M) selon la revendication précédente, lorsqu'il est subordonné à la revendication 9, **caractérisé en ce qu'**il comprend, après ladite étape (b1), les étapes supplémentaires suivantes:
(c) déplacer ledit au moins un élément de levage (41), le long de ladite deuxième direction (Z), vers une troisième position intermédiaire (U), située entre ladite deuxième position relevée (V) et ladite première position abaissée (T), ladite troisième position intermédiaire (U) étant telle que ladite pièce (P) se trouve dans une position intermédiaire entre une première hauteur de ladite mâchoire inférieure (31) et une deuxième hauteur de ladite mâchoire supérieure (32);
(d) déplacer au moins l'un desdits un ou plusieurs éléments de serrage (3) selon un mouvement relatif vers ladite pièce (P), dans ladite première direction (Y), jusqu'à une position telle que ladite pièce (P) se trouve, au moins partiellement, dans un volume ayant pour base ladite surface d'appui (311);
(e) déplacer ledit au moins un élément de levage (41) le long de ladite deuxième direction (Z), dans ladite première position abaissée (T), de sorte que ladite pièce (P) ne soit plus en contact avec ledit élément de levage (41);
(f) déplacer ladite mâchoire inférieure (31) et/ou ladite mâchoire supérieure (32) en les rapprochant l'une de l'autre dans ladite deuxième direction (Z), de manière à serrer ladite pièce (P).

11. Procédé de fonctionnement d'une machine (M) selon la revendication précédente, **caractérisé en ce qu'**il comprend les étapes supplémentaires suivantes:
(g) déplacer au moins l'un desdits un ou plusieurs éléments de serrage (3), qui soutiennent ladite pièce (P), le long de ladite première direction (Y), vers ledit élément de butée (42; 42');
(h) éloigner l'une par rapport à l'autre ladite mâchoire inférieure (31) et/ou ladite mâchoire supérieure (32) dans ladite deuxième direction (Z), de manière à déverrouiller ladite pièce (P);
(i) déplacer ledit au moins un élément de levage (41) dans ladite deuxième direction (Z) jusqu'à ladite troisième position intermédiaire (U), de manière à saisir et à soulever ladite pièce (P);
(l) déplacer au moins l'un desdits un ou plusieurs éléments de serrage (3) le long de ladite première direction (Y), en l'éloignant dudit élément de butée (42; 42');
(m) déplacer ledit élément de levage (41) dans ladite deuxième direction (Z) pour l'amener dans ladite deuxième position relevée (V).

12. Procédé de fonctionnement d'une machine (M) selon l'une quelconque des revendications 10 ou 11, dans lequel ladite machine (M) comprend au moins un élément de butée (5), disposé sur au moins l'une desdites une ou plusieurs barres (2), pour positionner ladite pièce (P) en butée contre ledit élément de butée (5), ledit procédé comprenant en outre, après ladite étape (e) et avant ladite étape (f), l'étape suivante:
(e1) déplacer ladite pièce (P) dans ladite première direction (Y) vers ledit élément de butée (5) de manière à la mettre en butée contre ledit élément de butée (5).

13. Procédé de fonctionnement d'une machine (M) selon la revendication précédente, dans lequel ledit élément de butée (5) est intercalé, dans ladite première direction (Y), entre ledit au moins un desdits un ou plusieurs éléments de serrage (3) et ladite pièce (P), ledit procédé étant **caractérisé en ce que** ladite étape (c) prévoit en outre que ladite troisième position intermédiaire (U) est telle que ladite pièce (P) se trouve dans une position, dans ladite deuxième direction (Z), intermédiaire entre une hauteur d'une extrémité (51) dudit élément de butée (5), distale par rapport à l'une desdites une ou plusieurs barres (2), et une deuxième hauteur de ladite mâchoire supérieure (32).
